# DEMANDE DE BREVET EUROPEEN

(11) **EP 0 546 970 A1**
(43) Date de publication de la demande: **16.06.1993**
(21) Numéro de dépôt: 92440128.4
(22) Date de dépôt: 19.11.1992
(51) Int. Cl.: A01G 17/06, F16G 11/12

(54) **Dispositif pour le réglage de la tension de fils, notamment des fils métalliques mis en oeuvre dans les techniques de palissage**

(30) Priorité: 19.11.1991 FR 9114469
(71) Demandeur: S.C.D.C. Sàrl, F-51270 Orbais l'Annaye (FR)
(72) Inventeur: Casters, Denis, F-51270 Mareuil-en-Brie (FR)
(74) Mandataire: Dénoyez, Hubert

(57) **Abrégé**

Dispositif pour le réglage de la tension de fils, notamment de fils métallique mis en oeuvre dans la technique du palissage.

Il comporte deux parties, une partie (1) constituée d'une tige métallique cambrée (10) se fixant à un piquet (12) et présentant une partie rectiligne rigide (13) ; et une partie formant un coulisseau (2) réalisé dans un matériau présentant une certaine élasticité, et comportant, au voisinage de ses deux extrémités, deux orifices (26, 27), d'un diamètre légèrement supérieur à celui de la tige métallique (10), dans lesquels est introduite la partie rectiligne rigide (13), le fil (3) étant solidarisé audit coulisseau (2) non loin de l'orifice (27) le plus éloigné du point de fixation de la tige (10) au piquet (12).

## Description

La présente invention a pour objet un dispositif pour le réglage de la tension de fils dans la technique du palissage mise en oeuvre dans les domaines de la viticulture, de l'arboriculture, de l'horticulture et autres.

On sait que le palissage consiste à tendre des fils, généralement en fer galvanisé, pour contenir et guider la poussée de la végétation, et qu'il est nécessaire de pouvoir régler la tension des fils, et notamment de relâcher cette tension après la pousse afin de faciliter l'engagement entre lesdits fils des nouveaux rameaux.

On connaît déjà des techniques et dispositifs permettant de réaliser cette tension des fils, avec la possibilité ou non de les détendre.

L'une de ces techniques consiste, notamment pour les vignes, à incliner les piquets de tête de route, ce qui permet de tendre les fils en suivant l'évolution de la végétation.

Un autre dispositif consiste en un tendeur sur lequel on enroule le fil jusqu'à obtenir la tension désirée.

Ces deux dispositifs présente le même inconvénient, à savoir que la tension des fils est d'un réglage approximatif, et que le relâchement de la tension ne peut se réaliser sans détérioration desdits fils : en effet le fait de détacher et de rattacher les fils , qui sont généralement fixés par entortillement, et de les dérouler et enrouler sur les tendeurs crée des zones de fragilité qui peuvent entraîner leur rupture.

Un autre dispositif consiste en l'utilisation d'une chaînette solidaire de l'extrémité du fil, un crochet solidaire d'un piquet, ou de l'extrémité d'un autre fil, étant engagé dans l'un des maillons de ladite chaînette en vue de permettre le réglage de la tension de maillon en maillon.

L'inconvénient de ce dispositif est que le réglage ne peut être suffisament précis.

La présente invention vise à remédier à ces divers inconvénients des dispositifs connus en proposant un dispositif de réglage rapide et précis de la tension d'un ou de plusieurs fils, adaptable sur tous types de piquets.

Le dispositif objet de la présente invention se compose de deux pièces, dont l'une se fixe à un piquet et l'autre à une extrémité du fil à tendre.

La pièce destinée à être fixée au piquet est avantageusement réalisée en une tige de métal cambrée présentant au moins une partie rectiligne rigide qui, lorsque le dispositif est mis en oeuvre, s'étend sensiblement dans le prolongement du fil à tendre.

La partie se fixant à l'extrémité du fil à tendre est un coulisseau, réalisé soit dans un feuillard, en métal ou en matière plastique, soit dans un fil cambré.

Conformément à l'invention, ledit coulisseau comporte deux orifices ou boucles disposés à une certaine distance l'un de l'autre, dans lesquels est introduite successivement la partie rectiligne de la pièce se fixant au piquet.

Ces orifices, ou boucles, sont réalisés de telle manière que l'introduction de la partie rectiligne ne peut s'effectuer que grâce à l'élasticité, longitudinale ou en torsion, du corps dudit coulisseau entre lesdits orifices, ou boucles.

De ce fait lorsque le coulisseau est en place sur la partie rectiligne rigide, il y est arc-bouté et son déplacement ne peut s'effectuer qu'en exerçant une force permettant le réalignement des axes desdits orifices, ou boucles.

Le fil à tendre est solidarisé au coulisseau non loin de l'orifice, ou boucle, le plus éloigné du piquet, la traction du fil ayant pour effet de renforcer l'arc-boutement, donc l'ancrage, du coulisseau, cette traction étant opposée à la force à exercer pour réaligner les axes des orifices, ou boucles, dudit coulisseau.

Le réglage de le tension du fil peut ainsi être réalisée de manière précise en déplaçant le coulisseau sur la partie rectiligne.

Les avantages et les caractéristiques de la présente invention ressortiront plus clairement de la description qui suit et qui se rapporte au dessin annexé, lequel en représente deux modes de réalisation non limitatifs.

Dans le dessin annexé:
- la figure 1 représente une vue en perspective d'un premier mode de réalisation du dispositif selon l'invention.
- la figure 2 représente une vue en perspective d'un second mode de réalisation de ce dispositif.

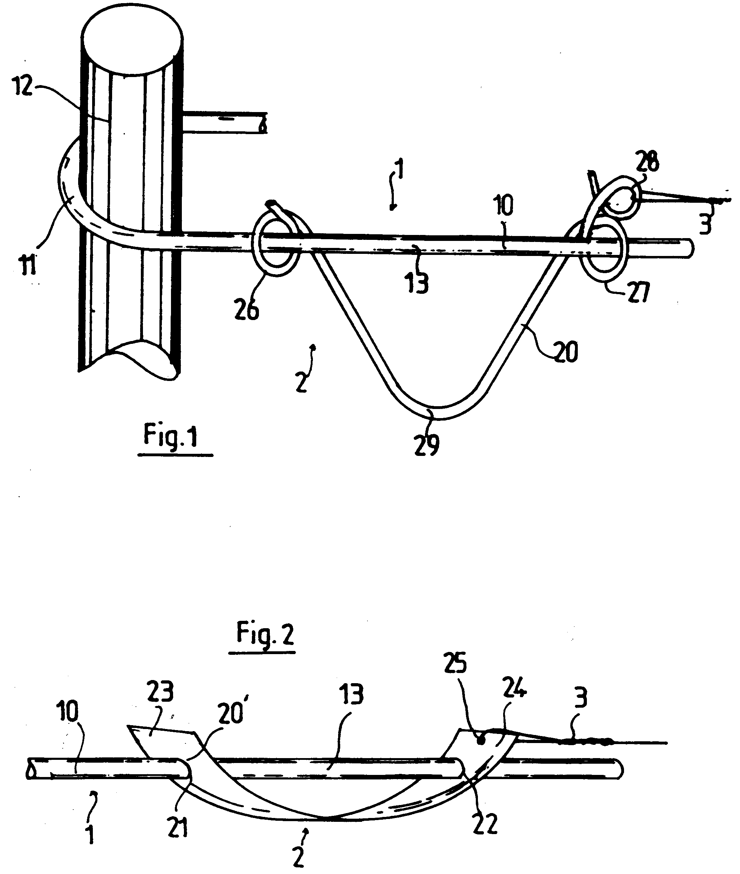

Si on se réfère à la figure 1 on peut voir que dans un premier mode de réalisation le dispositif selon l'invention comporte une partie 1 constituée d'une tige 10 cambrée dont une extrémité 11 est fixée à un piquet 12 et l'autre extrémité, 13, est rectiligne.

Sur la partie rectiligne 13 est engagé un coulisseau 2 réalisé dans un fil cambré 20 comportant à l'une de ses extrémités une boucle 26 et à l'autre deux boucles 27 et 28 juxtaposées, la boucle extrême 28 servant à la fixation du fil 3 à tendre.

Entre les deux boucles 26 et 27 le fil 20 présente une courbure 29.

Les boucles 26 et 27 sont réalisées de telles manière que les axes des orifices qu'elles forment soient parallèles, de sorte que pour pouvoir y introduire la partie rectiligne 13 de la tige 10 il est nécessaire d'aligner les orifices des boucles 26 et 27, ce qui n'est réalisable qu'en exerçant une torsion du fil 20.

Si on se réfère maintenant à la figure 2, on peut voir que dans un autre mode de réalisation le coulisseau 2 est constitué d'un feuillard 20' comportant deux orifices 21 et 22 non loin de chacune de ses extrémités, respectivement 23 et 24, ces orifices étant d'un diamètre légèrement supérieur à celui de la tige 10.

Pour introduire la partie rectiligne 13 de la tige 10 successivement dans les orifices 21 et 22 du feuillard 20 il est nécessaire d'en aligner les axes et donc de courber ce dernier, qui, du fait de son élasticité tend à reprendre sa forme initiale rectiligne, en s'arc-boutant sur la partie rectiligne 13 de la tige 10.

Le feuillard 20' comporte de plus, entre l'une de ses extrémités 24 et l'orifice voisin 22, un orifice 25 dans lequel est enfilé et fixé le fil 3 à tendre.

La traction exercée par le fil 3 tend à arc-bouter davantage le feuillard 20, qui de ce fait est parfaitement immobilisé sur la partie rectiligne 13 de la tige 10.

Pour déplacer longitudinalement le coulisseau 2 sur la tige 1, en vue de tendre ou détendre le fil 3, il suffit d'accentuer la courbure du feuillard 20 afin de réaligner les axes des orifices 21 et 22.

Il est à noter que la fixation au piquet 12 de la partie 1 peut se réaliser de différentes manières. Ainsi, dans le cas représenté à la figure 1, la partie 1 est une tige recourbée à l'une de ses extrémités de manière à enserrer le piquet 12, et maintenue en position par la tension du fil 3.

Dans un autre mode de réalisation, approprié particulièrement au palissage des vignes, la tige 10 est en forme de U dont les branches constituent chacune une partie rectiligne 13 sur laquelle est disposée un coulisseau 2, permettant la solidarisation de deux fils 3 parallèles.

Il va de soi que la présente invention ne saurait être limitée à la description qui précède de certains de ses modes de réalisation, susceptibles de subir un certain nombre de modifications sans pour autant sortir du cadre de l'invention.

## Revendications

**1)** Dispositif pour le réglage de la tension de fils, notamment de fils métalliques mis en oeuvre dans la technique du palissage, caractérisé en ce qu'il comporte deux parties, une partie (1) constituée d'une tige métallique cambrée (10) se fixant à un piquet (12) et présentant une partie rectiligne rigide (13) s'étendant, lorsque ledit dispositif est mis en place, sensiblement dans le prolongement du fil (3) à tendre ; et une partie formant un coulisseau (2) réalisé dans un matériau présentant une certaine élasticité, et comportant, au voisinage de ses deux extrémités, deux orifices (21, 22 ; 26, 27), d'un diamètre légèrement supérieur à celui de la tige métallique (10), dont les axes sont parallèles lorsque ledit coulisseau est au repos, et dans lesquels est introduite la partie rectiligne rigide (13), le fil (3) étant solidarisé audit coulisseau (2) non loin de l'orifice (22, 27) le plus éloigné du point de fixation de la tige (10) au piquet (12).

**2)** Dispositif selon la revendication 1 caractérisé en ce que le coulisseau (2) est un fil cambré (20) comportant à ses extrémités des boucles (26, 27) constituant les orifices de passage de la partie rectiligne (13), et une courbure (29) approximativement en son milieu, le fil (3) étant fixé à une bouche (28) juxtaposée à la boucle (27) la plus éloignée du piquet (12).

**3)** Dispositif selon la revendication 1 caractérisé en ce que le coulisseau (2) est un feuillard (20') en métal ou en matière plastique percé, au voisinage de ses deux extrémités, de deux orifices (21, 22) pour le passage de la tige (10), et d'un orifice (25), à son extrémité (24) la plus éloignée du piquet (12), pour la fixation du fil (3).

**4)** Dispositif selon l'une quelconque des revendications 1 à 3, caractérisé en ce que la tige (10) est cambrée à une de ses extrémités (11) de manière à épouser le contour du piquet (12).

**5)** Dispositif selon l'une quelconque des revendications 1 à 3, caractérisé en ce que tige (10) présente la forme d'un U, sur chacune des branches (13) duquel est dispose un coulisseau (2).
